**Europäisches Patentamt**

**European Patent Office**

**Office européen des brevets**

(19)

(11) Veröffentlichungsnummer: **0 104 430**
**B1**

(12) # EUROPÄISCHE PATENTSCHRIFT

(45) Veröffentlichungstag der Patentschrift:
04.02.87

(51) Int. Cl.⁴: **B 23 B 51/00, B 23 P 15/32**

(21) Anmeldenummer: 83108289.6

(22) Anmeldetag: 23.08.83

(54) Rotations-Schneidwerkzeug und Verfahren zu seiner Herstellung.

(30) Priorität: 02.09.82 DE 3232686

(43) Veröffentlichungstag der Anmeldung:
04.04.84 Patentblatt 84/14

(45) Bekanntmachung des Hinweises auf die Patenterteilung:
04.02.87 Patentblatt 87/6

(84) Benannte Vertragsstaaten:
AT CH DE FR GB IT LI

(56) Entgegenhaltungen:
DE-A-1 652 675
DE-U-1 938 424
GB-A-2 065 769
US-A-1 847 302
US-A-2 858 718

(73) Patentinhaber: **HARTMETALLWERKZEUGFABRIK ANDREAS MAIER GMBH + CO KG, Stegwiesen 2, D-7959 Schwendi- Hörenhausen (DE)**

(72) Erfinder: **Maier, Andreas, Stegwiesen 2, D-7959 Schwendi- Hörenhausen (DE)**

(74) Vertreter: **Braito, Herbert, Dipl.- Ing., Postfach 1140 Martin- Luther- Strasse 1, D-7950 Biberach/Riss 1 (DE)**

EP 0 104 430 B1

**Beschreibung**

Die Erfindung betrifft ein Rotations-Schneidwerkzeug, insbesondere zum Bohren, Fräsen, Reiben oder Senken, dessen durch eine Spannut hinterfaßte Schneidkante wenigstens im Bereich ihrer höchstbeanspruchten Schneidecke durch einen Schneidköper gebildet ist, der Bestandteile aus ultrahartem, polykristallinen Schneidstoff wie kubischer Diamant (PKD) oder Bornitrid (CBN) aufweist und mittels wenigstens einer großflächigen Schneidkörperverbindung an einem durch starren und gut wärmeleitenden Werkstoff wie Hartmetall gebildeten Teil des Werkzeugkörpers und/oder eines gesonderten Schneidkörperträgers verankert ist. Ein solches Schneidwerkzeug ist z.B. aus der GB-A- 20 85 769 bekannt.

Seit der Entwicklung polykristalliner Schneidstoffe wie kubischer Diamant oder Bornitrid sind Zerspanungsleistungen mit Schnittgeschwindigkeiten, Standzeiten und Bearbeitungsgüte möglich geworden, die vielfach über die Leistungen des bisher eingesetzten Hartmetalls hinausgehen. Gegenüber den früher verwendeten Einkristallen haben die polykristallinen Schneidstoffe den Vorteil größerer Orientierungsfreiheit, d. h. sie müssen nicht zu einer bestimmten Kristallebene ausgerichtet werden, um in einer vorgegebenen Richtung schneiden zu können. Mit derartigen Schneidstoffen lassen sich mit zufriedenstellenden Ergebnissen auch Werkstoffe zerspanen, die mehr oder weniger regelmäßig von Bestandteilen außergewöhnlich großer Härte durchsetzt sind, wie dies z. B. für glasfaserverstärkte Leiterplatten zutrifft.

Der hohe preis dieser neuartigen Schneidstoffe und die Temperaturempfindlichkeit der Diamanten beschränken jedoch die Einsatzmöglichkeiten. So werden Diamantwerkstoffe vornehmlich bei Nichteisenmetallen und Kunststoffen eingesetzt, während Eisenwerkstoffe mit dem weniger temperaturempfindlichen CBN bearbeitet werden. Stets ist man jedoch gezwungen, den teuren Werkstoff in möglichst geringen Mengen in einer vorfabrizierten Form dort einzusetzen, wo örtlich die höchsten Beanspruchungen auftreten. Dies sind insbesondere Haupt- und Nebenschneide, vor allem aber die Schneidecken. Aus diesem Grunde werden in aller Regel an den Haupt-Verschleißstellen der Schneiden dünne Segmente (Schneidblättchen) aus polykristallinem Schneidstoff eingelötet. Hierzu muß eine Aufnahmetasche eingeschliffen, in dieser das Segment eingelötet und anschließend in seiner Halterung geschliffen werden. Auch dabei bleibt das eingelötete Blättchen als gesonderter Körper erhalten und ist durch Absätze gegenüber dem tragenden, meist aus Hartmetall bestehenden Werkzeugkörper abgegrenzt. Nahezu die gesamte Schneidwärme muß von den verhältnismäßig kleinen Schneidblättchen aufgenommen und über die Verbindungsflächen weiter in den Werkzeugkörper eingeleitet werden. Da diese Verbindungsflächen vor allem nach schneidtechnischen und festigkeitstechnischen Gesichtspunkten gestiltet sind, ergibt sich ein recht ungleichmässiger Wärmefluß, was bei stärkerer Beanspruchung zu Wärmeverformungen führt, die wiederum Schwingungen auslösen oder verstärken können. Dies beeinträchtigt die Oberflächengüte, deren Werbesserung ja gerade durch den Einsatz der neuartigen Schneidstoffe angestrebt wird. Zudem lassen sich Aufnahmetaschen für Schneidblättchen nur bei Werkzeugdurchmessern ab ca. 5 mm einformen, was den Einsatz dieser Schneidblättchen für dünnere Werkzeuge ausschließt.

Die Erfindung geht aus von dem eingangs geschilderten Rotations-Schneidwerkzeug und verfolgt die Aufgabe, dieses Werkzeug so zu gestalten, daß es, auch ohne Durchmesserbegrenzung nach unten, im Bereich aller hochbeanspruchten Schneidenteile mit polykristallinem Schneidstoff wie kubischer Diamant oder CBN versehen werden kann, wobei die Temperaturableitung aus dem Schneidkörper in den Werkzeugkörper ebenso vergleichmäßigt und verbessert wird wie die Schneid- und Leitgeometrie.

Zur Lösung dieser Aufgabe wird erfindungsgemäß der Schneidkörper als sich quer zur Werkzeugachse über die ganze Stirnfläche des Werkzeugkörpers erstreckender aus ultrahartem polykristalinen Material bestehender Bohrer-Vollkopfschneidkörper ausgebildet, und wenigstens die Spannut wird in den Schneidkörper eingeschliffen und von diesem ausgehend durch mindestens einen Teil der Schneidkörperverbindung hindurch in den schneidaktiven Teil des Werkzeugkörpers hinein durchgeformt.

Zum Unterschied von der bekannten Blättchentechnik kann erfindungsgemäß ein wenigstens die Schneidkantenecken, die Hauptschneide und ggf. einen wesentlichen Teil der Nebenschneide umfassender Bereich ausschließlich von einem polykristallinen Schneidkörper gebildet werden, der einstückig mit einem tragenden Teil, meist aus preiswerterem Hartmetall, verbunden ist, wobei wenigstens die Spannuten über die Anschlußfläche zwischem dem Schneidkörper und dem diesen tragenden Teil hindurch eingeschliffen sind und somit glattflächige Spanführungen ergeben. Außer der Spanabfuhr wird auch die gesamte Schneid- und Leitgeometrie verbessert. Da alle sich sonst zwischen Schneidblättchen und Werkzeugkörper bildenden Absätze entfallen, kann die Außenform des Werkzeuges grundsätzlich in der gleichen Weise gestaltet werden wie bei üblichen Hartmetall- und Stahlwerkzeugen. Ein erfindungsgemäßer Volldiamantkopf bringt eindeutig verbesserte Schnittbedingungen, wie überhaupt gesteigerte Leistungsdaten gegenüber mit Diamantblättchen bestückten Hartmetallbohrern erzielt werden.

Dieser Vollkopf wird in der Regel gleichen Durchmesser haben wie der ihn tragende Werkzeugteil, kann diesen aber auch geringfügig nach außen überragen und nach Art einer Haube aufgesetzt sein, falls dies schneidtechnische Vorteile bringt. In der Regel kann jedoch der Vollkopf als stufenlose Fortsetzung des tragenden Schaftteiles angesehen werden. Da sich die Anschlußfläche über den ganzen verfügbaren Querschnitt erstreckt, kann auch auf diesem ganzen Querschnitt die im Schneidkopf entstehende Wärme abgenommen und in den Werkzeugkörper weitergeleitet werden. Vor allem wird dadurch der Wärmeübergang vergleichmäßigt, was Verformungen bei thermischer Hochbeanspruchung entgegenwirkt und einen stabilen Rundlauf mit außergewöhnlicher Oberflächengilte auch bei thermischen Grenzbedingungen ermöglicht. Bei dünneren Bohrern unter 5 mm oder 4 mm ermöglicht die Erfindung erst den Einsatz der neuartigen polykristallinen Hochleistungsschneidstoffe. Diese Bohrer sind zunächst auch das Hauptanwendungsgebiet, weil man dort mit verhältnismäßig kleinen Mengen Schneidwerkstoff für den Vollkopf auskommt und weil gerade hier erhebliche Beanspruchungen beim Bohren von mit Glasfasern durchsetzten Leiterplatten auftreten.

Zur Bearbeitung des hier in Vollkopfausführung eingesetzten Schneidmaterials stehen nur vergleichbar harte Bearbeitungsmaterialien zur Verfügung. So kann ein Diamantwerkstoff ausschließlich mit Diamantwerkstoff bearbeitet werden, was entsprechend großem Verbrauch des wiederum teueren Bearbeitungsmaterials erfordert. Zudem ist man stets davon ausgegangen, daß Schneidkörper aus polykristallinen Schneidstoffen zwar eindimensionalen Beanspruchungen in Richtung einer bestimmten Schnittkraft zu wiederstehen vermögen, nicht aber gesamt Verformungsbeanspruchungen, wie sie durch die Torsion beim Bohrvorgang entstehen. Aus diesem Grunde sind daher nicht einmal Versuche bekannt worden, polykristalline Schneidstoffe vergleichbarer Beanspruchung auszusetzen. Die von der Anmelderin angestrebten Untersuchungen haben jedoch die Befürchtungen der Fachwelt nicht bestätigt. Es hat sich vielmehr gezeigt, daß polykristalline Vollkopfausführungen wenigstens bei Bohrern kleiner Durchmesser nicht nur außergewöhnliche Steigerungen der Schnittleistungen erbringen, sondern auch große Standzeiten insgesamt und zwischen den einzelnen Nachschleifvorgängen ermöglichen. Damit wird gerade der Einsatz in dem Durchmesserbereich ermöglicht, der den Einsatz einzelner Schneidblättchen nicht zuläßt. Bei Bohrern unter 5 mm ist vor allem das auszuformende Spanvolumen und damit der Bearbeitungspreis im Bezug auf die Kosten des Bohrers verhältnismäßig klein.

Besondere Bedeutung hat die Erfindung auch für alle automatisch gesteuerten Bohreinrichtungen. Dabei kommt es vor allem auf hohe Standzeiten und möglichst wenig Werkzeugwechselvorgänge an. Gerade das läßt sich aber mit den verfügbaren Hartmetallen bei der gegebenen hohen Beanspruchung meist nicht verwirklichen. Mit Diamant-Schneidkörpern läßt sich jedoch vor allem bei automatischer Kontrolle des Schneidenzustandes eine etwa 100-fach größere Standzeit als mit Hartmetall erzielen.

Nach einem Erfindungsvorschlag umfaßt die Schneidkörperverbindung unmittelbar durch eine Anschlußfläche zwischen Schneidkörper und Werkzeugkörper hindurch wirkende Ankermittel. Es kann dann in der Anschlußfläche Werkstoff des Werkzeugkörpers bzw. eines gesonderten Verbindungsmediums unmittelbar in das Kristallgitter der Schneidkristalle eingebettet werden. Besondere Bedeutung kommt hier im Vakuum ausgeübten Lötverfahren zu.

Eine solche unmittelbare Verbindung in der ersten Anschlußfläche ist jedoch für viele Betriebsbedingungen nicht ohne weiteres geeignet. In der Regel wird daher der Schneidkörper schon vom Hersteller über eine erste Anschlußfläche an einem Schneidkörperträger verankert, der seinerseits über eine zweite Anschlußfläche am Werkzeugkörper befestigt wird. Auf diese Weise erreicht man größere Freiheit in der Befestigungsart ohne Gefahr, daß der Schneidkörper beim Anschluß an den Werkzeugkörper eine Beschädigung oder eine Zustandsänderung erfährt. Diese Vorteile ergeben sich auch schon dann, wenn die beiden Anschlußflächen nur verhältnismäßig kleinen Abstand voneinander haben.

So kann in der zweiten Anschlußfläche eine Zwischenschicht aus gut wärmeleitendem Metall eingelagert sein, dessen Schmelzpunkt unterhalb der Umwandlungstemperatur des Schneidkörper-Werkstoffes liegen kann, sofern für ein hinreichendes Temperaturgefälle bis zum Schneidkörper gesorgt ist. Dabei kann auch auf Lötverfahren zurückgegriffen werden, wie sie an sich aus der Befestigung von Einkristall-Diamanten, Rubinen u. dgl. ebenso bekannt sind wie aus der Verwendung gesonderter Schneidblättchen. Dabei kann es sich empfehlen, den Lötvorgang unter Schutzgas auszuführen.

Die Möglichkeiten zum Ableiten der Schmelzwärme und damit zur Sicherung des Schneidkörpers gegen Überhitzung steigen mit der axialen Länge des Schneidkörperträgers, die mehrfach größer sein kann als die axiale Abmessung des Schneidkörpers. In diesem Fall läßt sich auch der Schneidkörperträger als schneidaktives Werkzeugelement verwenden, d.h. man kann Schneidkanten, Spannuten u. dgl. in diesem Schneidkörperträger auslaufen lassen, der damit im Prinzip zum eigentlichen Werkzeug wird.

Während bei der Ausbildung des Schneidkörperträgers als dünnes Blättchen die zweite Anschlußfläche bei Rotationswerkzeugen praktisch nur in einer Radialebene angeordnet werden kann, eröffnet die größere Länge des Schneidkörperträgers auch andere Anschlußmöglichkeiten vor allem dadurch, daß man die zweite Anschlußfläche vielfach größer ausbildet als ihre radiale Querschnittsfläche. So kann die zweite Anschlußfläche wenigstens einen überwiegend längs der Rotationsachse erstreckten Flächenteil aufweisen, der beispielsweise bei einer einfachen Überlappungsverbindung in einer Axialebene verläuft. Man kann eine einzige schräg liegende Ebene oder auch eine gewölbte Verbindungsfläche, einen einfachen oder mehrfachen Keileingriff, einen Feder-Nut-Eingriff auch an entsprechenden rotationssymetrischen Anschlußflächen vorsehen. So kann die zweite Anschlußfläche wenigstens eine Kegelfläche, insbesondere mehrere konzentrische Kegelflächen aufweisen.

Bei derart großen Anschlußflächen, die noch entsprechenden Abstand vom Schneidkörper haben, empfiehlt sich die Verwendung eines hitzebeständigen Klebers, der in der Regel kalt aufgetragen wird. Man braucht dann nur identische Anschlußflächen an Schneidkörperträger und Werkzeugkörper vorzusehen und kann die Teile auf höchst einfache Weise zusammenfügen. Es sollte jedoch darauf geachtet werden, daß beim Klebevorgang die unmittelbare Abstützung der beiden Werkzeugteile in den Anschlußflächen nicht verloren geht. Daher empfiehlt es sich, diese Flächen mit einer angemessenen Rauhigkeit zu versehen, damit die Klebeschicht sich nur in den Vertiefungen zwischen gegeneinanderstoßenden Erhebungen ausbilden kann, nicht aber einen auch noch so begrenzten Freiheitsgrad zur Folge hat.

Nach einem anderen Vorschlag werden Schneidkörperträger und Werkzeugträger aufeinander festgeschrumpft. D.h. in aller Regel, daß der Schneidkörperträger als zylindrischer Stift ausgebildet wird, in einer Höhlung des Werkzeugträgers sitzt und durch von diesem aufgebrachte Schrumpfkräfte gehalten wird.

Bei den letzterwähnten Verbindungsarten werden wegen der verfügbaren Länge des Schneidkörperträgers die Werkzeugformungen wie Schneidkanten und Spannuten ausschließlich vom Schneidkörper durch die erste Anschlußfläche in den Schneidkörperträger hinein geführt, d.h. Leitkörper und Schneidkörperträger bilden das eigentliche Werkzeug, und der Werkzeugkörper übernimmt die Funktion eines Werkzeugträgers. Dort ist es daher auch grundsätzlich möglich, den Schneidkörperträger lösbar am Werkzeugkörper einzuspannen. Bei sorgfältiger Wärmeableitung kann es bei Verwendung von hitzebeständigerem Werkstoff wie CBN auch angebracht sein, Schneidkörperträger und Werkzeugträger zu verschweißen, wozu sich ein Reibschweißverfahren empfiehlt.

Die Erfindung betrifft ferner ein wirtschaftlich auszuführendes Verfahren zum Herstellen eines Rotations-Schneidwerkzeuges der vorbeschriebenen Ausführung, wonach ein aus ultrahartem polikristallinen Schneidstoff wie kubischer Diamant oder Bornitrid gebildeter Vollkopf-Schneidkörper und ein Werkzeugkörper bzw. ein Schneidkörperträger aus einem Werkstoff geringerer Härte mit radialen Querschnitten, die allseitig um ein Übermaß größer sind als der wirksame Querschnitt des herzustellenden Schneidwerkzeuges, auf einander zugewandten Seiten in einer identischen, quer zur Werkzeugachse liegenden Anschlußfläche verbunden und auf ihrer gemeinsamen Mantelfläche zum Vollquerschnitt geschliffen werden, woraufhin das Querschnittsprofil des Werkzeuges ggf. mit wenigstens einer Spannut, durch die gemeinsame Anschlußfläche hindurch in den Vollkopf-Schneidkörper und den Schneidkörperträger eingeschliffen und anschließend die Endfläche mit der Schneidkante geschliffen wird.

Hier wird zunächst ein sich über die ganze Querschnittsfläche quer zur Werkzeugachse erstreckter Schneidkopf aus polykristallinem Schneidwerkstoff auf seinem Trägerteil aufgesetzt und fest mit diesem verbunden. Aus dem so geschaffenen Verbundkörper wird dann praktisch ausschließlich durch Schleifvorgänge, das Rotationswerkzeug geformt, dessen hochbeanspruchte Schneidkantenstellen sämtlich in dem aus ultraharten Kristallen gebildeten Schneidkopf liegen. Die dabei eingesetzten Schleifwerkzeuge müssen vornehmlich auf das polykristalline Schneidmaterial abgestimmt werden, d. h. es ist wesentlich, daß bei hinreichendem Materialabtrag die entstehende Wärme abgeleitet wird. Als geeignet haben sich vor allem Diamantschleifscheiben mit Kühlmitteltaschen und einer Einbettung der Diamantkörner in hochleitfähige metallische Werkstoffe wie Kupfer und Silber erwiesen.

Nach einem Erfindungsvorschlag werden zunächst der Schneidkörper und der aus formbeständigem, gut leitfähigem Werkstoff bestehende Schneidkörperträger in einer ersten Anschlußfläche miteinander verbunden und daraufhin der Schneidkörperträger am Werkzeugträger befestigt. Während die Verbindung in der zweiten Anschlußfläche durch Abwandlung einer Arbeitsweise geschaffen werden kann, wie sie vom Anschluß herkömmlicher Mehrlagen-Schneidblättchen bekannt ist, bereitet die Temperaturempfindlichkeit vor allem der Diamantkristalle bei der Verbindung des Schneidkörpers mit dem Schneidkörperträger bzw. direkt dem Werkzeugkörper Schwierigkeiten. Auch dort kann man im Prinzip eine Verbindung durch lötartiges Einschalten einer Verbindungsschicht aus hochleitfähigem Metall schaffen. Als zweckmäßig hat sich jedoch erwiesen, den Schneidkörper wenigstens teilweise auf dem Schneidkörperträger bzw. dem Werkzeugträger aufzukristallisieren. Auf diese Weise wird eine Übergangsschicht erstellt, in der das Kristallgitter von Schneidkristallen verankernd in dem Werkstoff des Anschlußkörpers eingreift.

Für die zweite Anschlußfläche hat sich als brauchbar erwiesen, Schneidkörperträger und Werkzeugkörper durch ein Schmelzverfahren unter Bildung einer Zwischenschicht aus hochleitfähigem Werkstoff in solcher Weise zu verbinden, daß die Temperatur bis zum Schneidkörper unter dessen Umwandlungstemperatur absinkt. Hierzu kann der Schneidkörperträger zum Werzeugkörper zentriert, über ein Lötmaterial, insbesondere eine zwischengelegte Lötfolie, gegen den Werkzeugkörper angedrückt und dabei das Lötmaterial vom Werkzeugkörper her auf die Schmelztemperatur erhitzt und anschließend ausgehärtet werden.

Die beim Lötvorgang auf den Werkzeugkörper ausgeübte Wärme läßt sich dabei durch Massekontakt nach außen ableiten, indem man eine den Werkzeugkörper umgebende Hülle selbst entsprechend massiv ausbildet, auf einen metallischen Tisch aufstellt oder dgl..

Der wärmeemfindliche Schneidkörper kann wenigstens von der Stirnseite her mittelbar oder unmittelbar gekühlt werden, beispielsweise in einem Kühlluftstrom liegen oder in einem von Kühlflüssigkeit durchflossenen Ring, einer Haube oder dgl. umgeben sein. Stets kann die Zentrierung von einer evtl. verlorenen Zentrierhülse übernommen werden, die beim Lötvorgang am Werkzeug angelötet wird und später wieder abgelöst oder vor der anschließenden Formgebung abgeschliffen wird.

Wenn auch das Anlöten die hier als üblich angesehene Verbindungsart ist, so werden bei größerer axialer Länge des Schneidkörperträgers auch Klebe- und Schrumpfverbindungen in Betracht kommen. Beim Schrumpfen muß lediglich dafür gesorgt werden, daß die nach dem Aufschrumpfvorgang vom Werkzeugkörper her übertragene Wärme so abgeleitet wird, daß die Erhitzungsgrenzen eingehalten werden.

Die Zeichnung gibt die Erfindung beispielsweise wieder. Es zeigen

Fig. 1 eine Seitenansicht eines herkömmlichen Spiralbohrers mit eingesetzten Diamantblättchen,

Fig. 2 eine Stirnansicht dieses Bohrers von oben in Fig. 1 gesehen,

Fig. 3 eine Stirnansicht eines Bohrers mit zwei unmittelbar aneinandergefügten Diamantblättchen,

Fig. 4 eine Seitenansicht eines erfindungsgemäßen Spiralbohrers mit verstärktem Schaft und Volldiamant-Schneidkopf,

Fig. 5 eine Ansicht der Bohrerstirnfläche in vergrößertem Maßstab von oben in Fig. 4 gesehen,

Fig. 6 in Übereinanderanordnung die Ausgangsteile zur Herstellung eines Bohrers nach Fig. 4,

Fig. 7 eine Stirnansicht dieses Teiles von oben in Fig. 6 gesehen,

Fig. 8 die Einzelteile aus Fig. 6 nach dem Zusammenlöten,

Fig. 9 den Bohrer nach dem Schleifen des Nenndurchmessers,

Fig. 10 den gleichen Bohrer mit eingeschliffenen Spiralnuten,

Fig. 11 den fertig geschliffenen Bohrer entsprechend der Darstellung Fig. 4,

Fig. 12 einen Schnitt durch eine Lötvorrichtung,

Fig. 13 eine Ansicht der Lötvorrichtung nach Pfeil XIII von oben in Fig. 12 gesehen,

Fig. 14 eine der Fig. 13 entsprechende Teildarstellung und

Fig. 15 a bis f Verbindungsmöglichkeiten bei Verwendung eines langgestreckten Schneidkörperträgers.

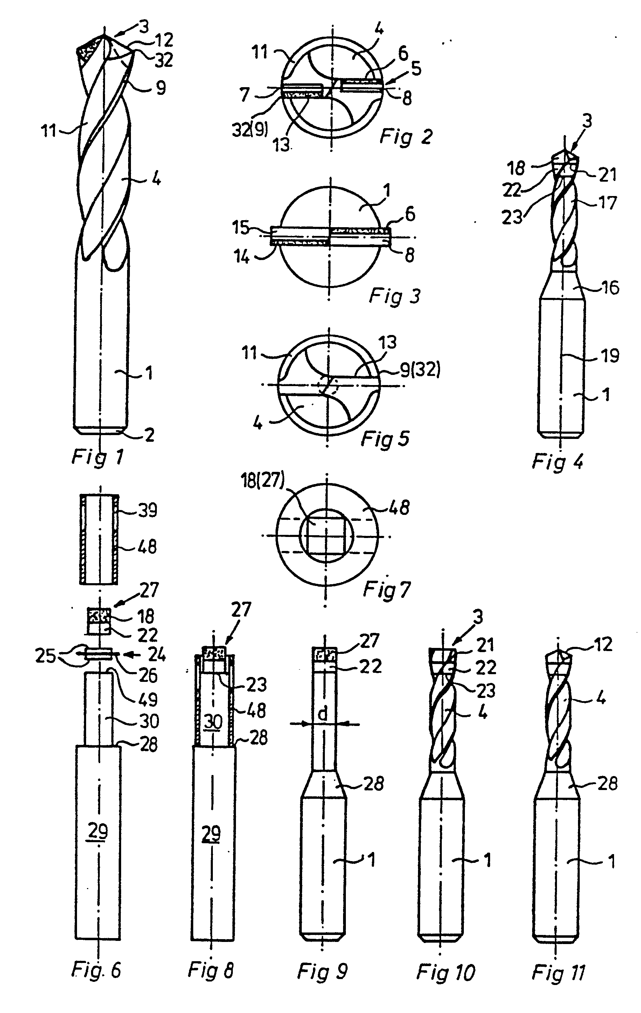

Bei bekannten Spiralbohrern größeren Durchmessers wird gemäß den Fig. 1 und 2 entsprechend den Abmessungen das Schaftes bzw. Werkzeugkörpers 1 vom Einspannende 2 bis zum Kopfende 3 durchgehend eine zylindrische Außenfläche angeschliffen, die u. U. auf ganzer Länge schon dem vorgesehenen Nennmaß entsprechen kann. Anschließend werden die Spannuten 4 bzw. das ganze Querschnittsprofil eingeschliffen, und am Kopfende 3 werden diametral gegenüberliegend zwei winkelförmige Taschen 8 eingeschliffen, in welche Schneidblättchen 5 eingelötet werden, die als Schneidkörper 6 beispielsweise einen polykristallinen Diamanten aufweisen können, der auf einer als Substrat dienenden Trägerschicht 7 schon bei der Herstellung angebracht ist.

Anschließend wird dann zunächst, beginnend von den äußeren Enden der beiden Schneidblättchen 5, die zylindrische Aussenfläche fertiggeschliffen (Nebenschneiden 9).

Dann wird das Kopfende 3 des Bohrers, soweit es nicht schon vorgeschliffen ist, zur Kegelfläche 12 geschliffen und damit die Hauptschneiden 13 gebildet. Stets bleiben die Schneidblättchen durch mehrere Absätze scharf gegenüber dem Werkzeugkörper abgegrenzt.

Es ist zwar möglich, gemäß Fig. 3 durch die ganze Stirnfläche des Werkzeugkörpers 1 eine Quernut 14 zu legen, in die man zwei plattenförmige Schneidkörper 15 aneinanderstoßend einlötet, die an einem oder beiden Enden vorstehen und in geeigneter Weise geschliffen werden können. Selbst diese Bauweise bereitet schon Schwierigkeiten bei kleinen Schneiddurchmessern. Die übliche Ausbildung von Spiralbohrern nach den Fig. 1 und 2 ist praktisch nur möglich bis herab zu Bohrerdurchmessern von ca. 5 mm.

Fig. 4 zeigt einen Bohrer im Grenzbereich dieser Abmessungen. Dabei besteht der Werkzeugkörper 1 ebenso wie nach Fig. 1 aus Hartmetall und ist in bekannter Weise durch einen Kegelabschnitt 16 auf den kleineren Durchmesser des Spiralenteiles 17 verjüngt. Der Kopfteil 3 des Bohrers ist jedoch erfindungsgemäß durch einen sich über die ganze Querschnittsfläche erstreckenden Schneidkörper 18 in Form eines polykristallinen Diamanten mit kubischer Kristallstruktur oder aus CBN gebildet. Dieser Schneidkörper ist in einer ersten, quer zur Werkzeugachse 19 liegenden Anschlußfläche 21 mit einem Schneidkörperträger 22 verbunden, der sich wiederum auf den ganzen Werkzeugquerschnitt erstreckt und in einer zweiten Anschlußfläche 23 mit dem Werkzeugkörper 1 verbunden ist.

Während die Verbindung in der Anschlußfläche 21 üblicherweise vom Schneidkörperhersteller selbst bewerkstelligt wird, muß die Verbindung in der Anschlußfläche 23 vom Werkzeughersteller vorgenommen werden. Dabei können grundsätzlich vergleichbare Befestigungsmethoden zur Anwendung kommen, sofern der Schneidkörper 18 keine Überhitzung erfährt. Während die Umwandlungsvorgänge von PKD schon im Bereich von 700° beginnen, können CBN-Schneidkörper ohne nachteilige Veränderungen Temperaturen bis zu ca. 1600°C aushalten. Aus diesem Grunde sind auch beim Anschluß von CBN- Schneidkörpern beispielsweise Lötverfahren mit höherer Arbeitstemperatur zulässig, während Diamant-Schneidkörper möglichst weitgehend gegen Temperatureinwirkung geschützt werden sollen. Für die Befestigung des Schneidkörpers 18 auf dem Schneidkörperträger 22 kommt aber auch ein Ankristallisieren bei der Herstellung in Betracht, bei der ohnehin wesentlich höhere Temperaturen angewandt werden.

Zur Herstellung des in Fig. 4 gezeigten Bohrers wird nach Fig. 6 an einem zylindrischen Werkzeug-Rohling 29, der evtl. mit etwas Übermaß schon auf den Schaftdurchmesser gearbeitet sein kann, am Kopfende ein von einer Ringschulter 28 abstehender Zylinderansatz 30 angeformt, dessen Ende 49 über eine dreischichtige Lötfolie 24 mit dem quaderförmigen Körper 27 mittels einer Zentrierhülse 48 verbunden werden soll. Dabei kann die Lötfolie 24 zwei äußere Lötmaterialschichten 25 zu beiden Seiten einer inneren Wärmeleitschicht 26 aufweisen, die in der Regel aus Kupfer besteht. Der durch den Schneidkörperträger 22 und den Schneidkörper 18 gebildete quaderförmige Körper 27 hat gemäß Fig. 7 eine Diagonale, die nur wenig kleiner ist als der Außendurchmesser des Zylinderansatzes 30. Der Innendurchmesser der Zentrierhülse 48 bildet dabei eine Spielpassung mit dem Außendurchmesser des Zylinderansatzes 30. Diese Zentrierhülse wird zunächst über den Zylinderansatz 30 gesteckt, dann die Lötfolie 24 durch zwei seitliche Durchbrechungen 39 der Zentrierhülse hindurch aufgelegt und daraufhin der quaderförmige Körper 27 eingesetzt. Beim Verlöten werden der Rohling und der quaderförmige Körper 27 in der Anschlußfläche 23 verbunden, wobei in der Regel die als Masseteil ausgebildete Zentrierhülse 48 festgelötet wird (Fig. 8). Anschließend wird gemäß Fig. 9 der vordere Teil auf den Bohrdurchmesser d unter Bildung des Kegelansatzes abgeschliffen. Daraufhin werden gemäß Fig. 10 die Spannuten 4, beginnend vom Kopfende 3 durch beide Anschlußflächen 21 und 23 hindurch, also vom Schneidkopf-Schneidkörper 18 durch den Schneidkörperträger 22 in den Hartmetall-Werkzeugkörper 1 eingeschliffen. Erst anschließend wird unter Bildung der Hauptschneide die Kegelfläche 12 und damit die Bohrerspitze angeschliffen.

Die Hauptschneide 13, der höchstbeanspruchte Teil der Nebenschneide 9 und die am Schnittpunkt beider Schneiden gebildete höchstbeanspruchte Ecke 32 liegen dabei sämtlich im Vollkopf-Schneidkörper 18. Die im Betrieb entstehenden Temperaturen können daher in Richtung der Werkzeugachse 19 durch die querliegende erste Anschlußfläche 21 hindurch in den Schneidkörperträger 22 und von diesem wieder in den Werkzeugkörper 1 auf ganzer Querschnittsfläche und damit äußerst gleichmäßig übergeleitet werden. Auf diese Weise ist sichergestellt, daß auch bei maximaler Beanspruchung der ganze schneidwirksame Werkzeugteil gleichmäßig vom Kopfende her durchgewärmt und dadurch einem Verzug in den Spiralengängen ebenso entgegengewirkt wird wie den bekannten Rundlaufmängeln.

Zum Unterschied vom Bohrer nach Fig. 1 wird auch der schneidwirksame Werkzeugteil beim erfindungsgemäßen Bohrer allseitig durch die Anschlußfläche 21, 23 hindurchgehend glattflächig begrenzt, was einmal dem Spanablauf und wiederum einer Verbesserung der Gleichförmigkeit des Wärmeflusses zugutekommt.

Bei der Bearbeitung dieses Verbundwerkzeuges muß möglichst vollständig auf die Eigenschaften des Schneidwerkstoffes abgestellt werden, d. h. es sind möglichst mit Kühltaschen versehene Schleifscheiben zu verwenden, welche die für die Bearbeitung von Diamanten und BZN erforderlichen Eigenschaften haben. Dabei sind in der Regel Diamantkörner eingelagert in hochwärmeleitende Metalle. Besondere Sorgfalt ist auch beim Durchführen der ersten Schliffe durch die beiden Anschlußflächen 21 und 23 anzuwenden und bei gröberer Körnung zunächst mit kleinerem Vorschub zu arbeiten. Es hat sich jedoch gezeigt, daß nach anfänglichem Durchführen der Spiralnuten durch die beiden Anschlußflächen anschließend durchaus zügig geschliffen werden kann. Allerdings sollte zum Vermeiden von Schwingungen beim Arbeitsvorgang zuverlässig abgestützt sein.

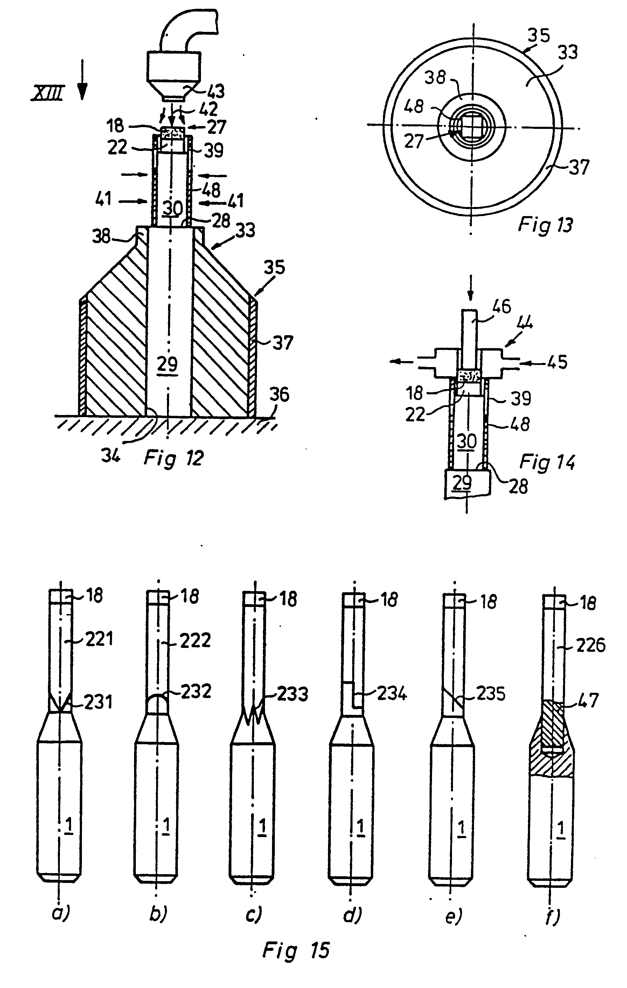

Die Fig. 12 und 13 zeigen eine zugehörige Haltevorrichtung mit einem rohrförmigen Aufnahmeteil 33, der eine zentrische zylindrische Führung 34 für den Werkzeugrohling 29 bildet und unten zur Vergrößerung der Masse einen verdickten Teil 35 aufweist. Der Aufnahmeteil kann auf einen massiven metallischen Arbeitstisch 36 aufgestellt werden und ist von einer Manschette 37 aus wärmeisolierendem Werkstoff umgeben, so daß die Vorrichtung sich von Hand leicht umsetzen läßt.

Der Hals 38 des Aufnahmeteils 33 schließt etwa mit der Ringschulter 28 ab, auf der die Zentrierhülse 48 abgesetzt wird. Die Lötwärme wird gemäß Pfeilen 41 von außen auf die Zentrierhülse 48 von den Durchbrechungen 39 abwärts zugeführt, um einen Temperaturabfall zum Schneidkörper 18 hin zu erhalten. Beim Lötvorgang wird dabei entsprechend Pfeil 42 ein leichter Druck auf den Schneidkörper ausgeübt, wobei zur Kühlung des Schneidkörpers Druckluft aus einer Düse 43 etwa in Richtung der Vorrichtungsachse zugeführt werden kann.

Nach Fig. 14 ist die Zentrierhülse 48 etwas kürzer gehalten, so daß der Schneidkörper 18 in einen ringförmigen Hohlkörper 44 hineinragt, der in Pfeilrichtung 45 von Kühlwasser durchströmt wird und durch einen Stempel 46 das Aufbringen des Anpressdruckes beim Lötvorgang ermöglicht.

In Fig. 15 ist davon ausgegangen, daß der Schneidkörper 18 an einem langgestreckten stabförmigen Schneidkörperträger 221 befestigt ist. Dieses Bauelement kann als Ganzes glattflächig rundgeschliffen sein und u. U. sämtliche Werkzeugschneiden aufnehmen. Auf diese Weise ist auch eine Klebeverbindung möglich, sofern hinreichend große Anschlußflächen zur Verfügung stehen. Die Anschlußfläche 231 nach Fig. 15a ist beispielsweise keilförmig ausgebildet, die Anschlußfläche 232 Fig. 15b teilzylindrisch o. dgl. gewölbt und die Anschlußfläche 233 ist als Mehrkeilfläche ausgebildet. Diese Anschlußflächen können auch zur Werkzeugachse rotationssymmetrisch also kegelförmig oder mehrkegelförmig ausgebildet sein. Bei Verwendung eines temperaturbeständigen Klebers und sorgfältiger Kühlung kann eine leichte und schnelle Verbindungsart ermöglicht werden, ebenso wie bei der Stufenform der Anschlußfläche 234 nach Fig. 15d und der Schrägfläche 235 nach Fig. 15c. In jedem Fall ist die Anschlußfläche vielfach größer als die entsprechende Querschnittsfläche.

Fig. 15f zeigt schließlich eine Schrumpfverbindung, wobei der Schleifkörperträger 226 vollzylindrisch ausgebildet und in eine Aufnahmebohrung 47 am vorderen Ende des erwärmten Werkzeugkörpers 1 eingesteckt ist, der beim Abkühlen dann die erforderliche Schrumpfverbindung bildet. Durch Riefen u. dgl. Aufrauhungen läßt sich dabei der Kupplungseingriff verbessern. Auch Einsintern kommt dort als Verbindungsart in Betracht, bei sorgfältiger Kühlung ggf. auch Reibschweissen.

Die Erfindung bezieht sich auf alle ultraharten Schneidwerkstoffe, d. h. Schneidwerkstoffe mit diamantartiger Härte. Dabei handelt es sich in aller Regel um Kornwerkstoffe, die zusammengebacken bzw. zusammenkristallisiert sind. Weit verbreitet und praktisch allerorts verfügbar sind derzeit polykristalline Schneidstoffe aus Diamant und Bornitrid mit kubischer Kristallstruktur (PKD; CBN). Weitere Schneidstoffe mit vergleichbarer Härte sind noch in der Entwicklung.

Die Erfindung bezieht sich neben Spiralbohrern auch auf Bohrer mit einer oder mehreren längs einer Mantellinie verlaufenden Schneidkanten und Spannuten sowie auf Flachbohrer, Kanonenbohrer und vergleichbare Reib- und Fräswerkzeuge, Hauptsächliches Anwendungsgebiet sind Werkzeuge mit aus dem Schaft herausgeformten Werkzeugkonturen, wobei der Umriß vornehmlich achsensymmetrisch, insbesondere zylindrisch ist. Die Werkzeuge können jedoch grundsätzlich jeden beliebigen Querschnitt haben, beispielsweise auch polygonal. Es muß auch der Querschnitt des Schaftes bzw. des Werkzeugkörpers nicht konstant bleiben, sondern kann sich in der jeweils geeigneten Weise ändern.

Stets führt die Erfindung zu einer sicheren und dauerhaften Befestigung des Schneidkopfes mit außergewöhnlich exakter und schwingungsarmer Führung der Schneidkanten und einer damit verbundenen Steigerung von Schnittleistung, Standzeit und Oberflächengüte. Rüstzeiten und Kontrollzeiten werden ebenso herabgesetzt wie die gesamte spezifische Arbeitszeit.

**Patentansprüche**

1. Rotations-Schneidwerkzeug, insbesondere zum Bohren, Fräsen, Reiben oder Senken, dessen durch eine Spannut hinterfaßte Schneidkante wenigstens im Bereich ihrer höchstbeanspruchten Schneidecke durch einen Schneidkörper (18) gebildet ist, der Bestandteile aus ultrahartem polykristallinen Schneidstoff wie kubischer Diamant oder Bornitrid (CBN) aufweist und mittels wenigstens einer großflächigen Schneidkörperverbindung (21 bis 23) an einem durch starren und gut wärmeleitenden Werkstoff gebildeten Teil des Werkzeugkörpers (1) und/oder eines gesonderten Schneidkörperträgers, verankert ist, dadurch gekennzeichnet, daß der Schneidkörper (18) als sich quer zu Werkzeugachse (19) über die ganze Stirnfläche des Werkzeugkörpers (1) erstreckender, aus ultrahartem polykristallinen Material bestehender Bohrer-Vollkopfschneidkörper ausgebildet ist und wenigstens die Spannut (4) in den Schneidkörper (18) eingeschliffen und von diesem ausgehend durch mindestens einen Teil (21) der Schneidkörperverbindung (21 bis 23) hindurch in den schneidaktiven Teil (17) des Werkzeugkörpers (1) hinein durchgeformt ist.

2. Schneidwerkzeug nach Anspruch 1, dadurch gekennzeichnet, daß die Schneidkörperverbindung unmittelbar durch eine Anschlußfläche (21) zwischen Schneidkörper (18) und Werkzeugkörper (1) hindurchwirkende Haltemittel aufweist.

3. Schneidwerkzeug nach Anspruch 1, dadurch gekennzeichnet, daß der Schneidkörper (18) über eine erste Anschlußfläche (21) an einem Schneidkörperträger (22) verankert ist, der seinerseits über eine zweite Anschlußfläche (23) am Werkzeugkörper (1) befestigt ist.

4. Schneidwerkzeug nach Anspruch 3, dadurch gekennzeichnet, daß wenigstens in der zweiten Anschlußfläche (23) eine Zwischenschicht aus gut wärmeleitendem Metall eingelagert ist, dessen Schmelzpunkt unterhalb der Umwandlungstemperatur des Schneidkörpers (18) liegt.

5. Schneidwerkzeug nach Anspruch 3 oder 4, dadurch gekennzeichnet, daß der insbesondere als schneidaktives Werkzeugelement ausgebildete Schneidkörperträger (221) eine axiale Länge hat, die mehrfach größer ist als die axiale Abmessung des Schneidkörpers (18).

6. Schneidwerkzeug nach Anspruch 3, 4 oder 5, dadurch gekennzeichnet, daß die zweite Anschlußfläche (231) vielfach größer ausgebildet ist als ihre radiale Querschnittsfläche.

7. Schneidwerkzeug nach Anspruch 6, dadurch gekennzeichnet, daß die zweite Anschlußfläche (234) wenigstens einen überwiegend längs der Rotationsachse erstreckten Flächenteil aufweist.

8. Schneidwerkzeug nach Anspruch 7, dadurch gekennzeichnet, daß die zweite Anschlußfläche (233) wenigstens als Feder-Nut-Eingriff ausgebildet ist.

9. Schneidwerkzeug nach Anspruch 6 oder 7, dadurch gekennzeichnet, daß die zweite Anschlußfläche (231, 233) wenigstens eine Kegelfläche, insbesondere mehrere konzentrische Kegelflächen aufweist.

10. Schneidwerkzeug nach einem der Ansprüche 6 bis 9, dadurch gekennzeichnet, daß Schneidkörperträger (22) und Werkzeugkörper (1) miteinander verklebt sind.

11. Schneidwerkzeug nach einem der Ansprüche 5 bis 10, dadurch gekennzeichnet, daß Schneidkörperträger (226) und Werkzeugkörper (1) aufeinander festgeschrumpft sind.

12. Schneidwerkzeug nach einem der Ansprüche 5 bis 9, dadurch gekennzeichnet, daß der Schneidkörperträger (22) lösbar am Werkzeugkörper (1) eingespannt ist.

13. Verfahren zum Herstellen eines Rotations-Schneidwerkzeuges nach einem der vorhergehenden Ansprüche, dadurch gekennzeichnet, daß ein aus ultrahartem polikristallinen Schneidstoff, wie kubischer Diamant oder Bornitrid gebildeter Vollkopfschneidkörper (18) und ein Werkzeugkörper (1) bzw. ein Schneidkörperträger aus einem Werkstoff geringerer Härte mit Radialquerschnitten, die allseitig um ein Übermaß größer sind als der wirksame Querschnitt des herzustellenden Schneidwerkzeuges auf einander zugewandten Seiten in einer identischen, quer zur Werkzeugachse liegenden Anschlußfläche verbunden und auf ihrer gemeinsamen Mantelfläche zum Vollquerschnitt geschliffen werden, daß daraufhin das Querschnittprofil des Werkzeuges ggf. mit wenigstens einer Spannut (4), durch die gemeinsame Anschlußfläche hindurch in den Vollkopfschneidkörper und den Schneidkörperträger eingeschliffen und anschließend die Endfläche mit der Schneide geschliffen wird.

14. Verfahren nach Anspruch 13, dadurch gekennzeichnet, daß zunächst der Schneidkörper und der aus formbeständigem, gut leitfähigem Werkstoff bestehende Schneidkörperträger in einer ersten Anschlußfläche miteinander verbunden und daß daraufhin der Schneidkörperträger am Werkzeugkörper befestigt wird.

15. Verfahren nach Anspruch 13 oder 14, dadurch gekennzeichnet, daß der Schneidkörper wenigstens teilweise auf dem Schneidkörperträger bzw. dem Werkzeugkörper aufkristallisiert wird.

16. Verfahren nach einem der Ansprüche 13 bis 15, dadurch gekennzeichnet, daß Schneidkörperträger und Werkzeugkörper in der zweiten Anschlußfläche durch ein Schmelzverfahren unter Bildung einer Zwischenschicht aus hochwärmeleitfähigem Werkstoff in solcher Weise verbunden werden, daß die Temperatur bis zum Schneidkörper unter dessen Umwandlungstemperatur sinkt.

17. Verfahren nach Anspruch 16, dadurch gekennzeichnet, daß der Schneidkörperträger zum Werkzeugkörper zentriert, über ein Lötmaterial, insbesondere eine zwischengelegte Lötfolie, gegen den Werkzeugträger angedrückt und dabei das Lötmaterial vom Werkzeugkörper her auf die Schmelztemperatur erhitzt und anschließend ausgehärtet wird.

18. Verfahren nach Anspruch 16 oder 17, dadurch gekennzeichnet, daß die dem Werkzeugkörper beim Lötvorgang zugeführte Wärme durch Massekontakt nach außen abgeleitet wird.

19. Verfahren nach einem der Ansprüche 16 bis 18, dadurch gekennzeichnet, daß der Schneidkörper wenigstens von der Stirnseite her mittelbar oder unmittelbar gekühlt wird.

**Claims**

1. Rotary cutting tool, especially for drilling, milling abrading or chamfering, the cutting edge of which has a groove engaging therebehind and is formed by a cutting body (18) at least in the region of its most highly stressed cutting angle, which cutting body has component parts formed from an ultrahard, polycrystalline cutting material such as cubic diamond or boron nitride (CBN) and is secured, by means of at least one cutting body connection (21-23) with a large area, to a portion of the tool body (1) and/or of a separate cutting body carrier formed from a rigid and highly heat-conductive material, characterised in that the cutting body (18) is in the form of a full-headed cutting body of a drill which extends over the entire end face of the tool body (1) transversely to the tool axis (19) and is formed from an ultra-hard, polycrystalline material, and at least the groove (4) is ground into the cutting body (18) and extends from the latter through at least a portion (21) of the cutting body connection (21 to 23) into the active cutting portion (17) of the tool body (1).

2. Cutting tool according to claim 1, characterised in that the cutting body connection includes retaining means which operate directly through a connecting surface (21) between cutting body (18) end tool body (1).

3. Cutting tool according to claim 1, characterised in that the cutting body (18) is secured, via the intermediary of a first connecting surface (21), to a cutting body carrier (22) which, in turn, is mounted on the tool body (1) via the intermediary of a second connecting surface (23).

4. Cutting tool according to claim 3, characterised in that an intermediate layer formed from a highly heatconductive metal is embedded in at least the second connecting surface (23) and has a melting point below the transformation temperature of the cutting body (18).

5. Cutting tool according to claim 3 or 4, characterised in that the cutting body carrier (221), which is especially in the form of an active cutting tool element, has an axial length which is considerably greater than the axial dimension of the cutting body (18).

6. Cutting tool according to claim 3, 4 or 5, characterised in that the second connecting surface (231) is considerably greater than its radial cross-sectional area.

7. Cutting tool according to claim 6, characterised in that the second connecting surface (234) has at least one surface portion which predominantly extends along the axis of rotation.

8. Cutting tool according to claim 7, characterised in that the second connecting surface (233) is at least in the form of a tongue-and-groove engagement.

9. Cutting tool according to claim 6 or 7, characterised in that the second connecting surface (231, 233) has at least one conical surface and, in particular, a plurality of concentric conical surfaces.

10. Cutting tool according to one of claims 6 to 9, characterised in that cutting body carrier (22) and tool body (1) are adhered together.

11. Cutting tool according to one of claims 5 to 10, characterised in that cutting body carrier (226) and tool body (1) are firmly shrunk on one another.

12. Cutting tool according to one of claims 5 to 9, characterised in that the cutting body carrier (22) is detachably clamped in position on the tool body (1).

13. Method of producing a rotary cutting tool according to one of the preceding claims, characterised in that a full-headed cutting body (18), formed from an ultra-hard, polycrystalline cutting materiel such as cubic diamond or boron nitride, and a tool body (1) or respectively a cutting body carrier formed from a material with a low degree of hardness are connected to radial cross-sections which are greater, by an excess amount all-round, than the effective cross-section of the cutting tool to be produced on sides which face one another in an identical connecting surface extending transversely to the tool axis and are cut along their common surface relative to the full cross-section, in that subsequently the cross-sectional profile of the tool, possibly with at least one groove (4), is ground through the common connecting surface into the full-headed cutting body and into the cutting body carrier and then the end face is cut by means of the cutting edge.

14. Method according to claim 13, characterised in that initially the cutting body and the cutting body carrier, which is formed from a highly conductive material of stable form, are joined together in a first connecting surface, and in that subsequently the cutting body carrier is mounted on the tool body.

15. Method according to claim 13 or 14, characterised in that the cutting body is at least partially crystallised onto the cutting body carrier or respectively onto the tool body.

16. Method according to one of claims 13 to 15, characterised in that cutting body carrier and tool body are connected in the second connecting surface by a melting process, thereby forming an intermediate layer from a highly heat-conductive material, in such a manner that the temperature as far as the cutting body drops below the transformation temperature thereof.

17. Method according to claim 16, characterised in that the cutting body carrier, centred relative to the tool body, is pressed towards the tool carrier via the intermediary of a soldering material, especially an interposed soldering foil, and the soldering material proceeding from the tool body is thereby heated to the melting temperature and then hardened.

18. Method according to claim 16 or 17, characterised in that the heat supplied to the tool body during the soldering process is dissipated outwardly by earth contact.

19. Method according to one of claims 16 to 18, characterised in that the cutting body is cooled indirectly or directly, at least from the end face.

## Revendications

1. Outil de coupe rotatif, en particulier pour le perçage, le fraisage, le polissage ou l'alésage, dont l'arête de coupe définissant à l'arrière une rainure à copeaux, est formée, au moins dans la zone de son angle tranchant le plus fortement sollicité, par un corps de coupe (18) qui présente des éléments constitutifs réalisés en un matériau de coupe polycristallin ultra-dur, tel que le diamant cubique ou le nitrure de bore (CBN), et est ancré, par l'intermédiaire d'au moins une jonction de corps de coupe (21-23), de grande surface, sur une partie, formée en un matériau rigide et bon conducteur thermique, du corps (1) de l'outil et/ou d'un support spécial du corps de coupe, caractérisé en ce que le corps de coupe (18) est réalisé sous la forme d'un corps de coupe à tête de foret pleine, constitué en un matériau polycristallin ultra-dur et s'étendant transversalement à l'axe (19) de l'outil sur toute la surface frontale du corps (1) de l'outil et en ce qu'au moins la rainure à copeaux (4) est aménagée par rodage dans le corps de coupe (18) et est façonnée à partir de celui-ci à l'intérieur de la partie active de coupe (17) du corps (1) de l'outil en traversant au moins une partie (21) de la jonction (21 à 23) du corps de coupe.

2. Outil de coupe selon la Revendication 1, caractérisé en ce que la jonction du corps de coupe présente un agent de retenue agissant directement à travers une surface de raccordement (21) entre le corps de coupe (18) et le corps (1) de l'outil.

3. Outil de coupe selon la Revendication 1, caractérisé en ce que le corps de coupe (18) est ancré par l'intermédiaire d'une première surface de raccordement (21) à un support (22) du corps de coupe, ledit support étant pour sa part fixé par l'intermédiaire d'une deuxième surface de raccordement (23) au corps (1) de l'outil.

4. Outil de coupe selon la Revendication 3, caractérisé en ce qu'au moins dans la deuxième surface de raccordement (23), est insérée une couche intermédiaire en un métal bon conducteur thermique dont le point de fusion se situe au-dessous de la température de transformation du corps de coupe (18).

5. Outil de coupe selon la Revendication 3 ou 4, caractérisé en ce que le support (221) du corps de coupe, réalisé en particulier sous la forme d'un élément de coupe actif de l'outil, a une longueur axiale plusieurs fois supérieure à la dimension axiale du corps de coupe (18).

6. Outil de coupe selon la Revendication 3, 4 ou 5, caractérisé en ce que la deuxième surface de raccordement (231) est réalisée sous une forme lui conférant une aire nettement supérieure à celle de sa section droite radiale.

7. Outil de coupe selon la Revendication 6, caractérisé en ce que la deuxième surface de raccordement (234) présente au moins une portion de surface s'étendant principalement le long de l'axe de rotation.

8. Outil de coupe selon la Revendication 7, caractérisé en ce que la deuxième surface de raccordement (233) est au moins en partie conçue sous la forme d'un assemblage à languettes et rainures en prise mutuelle.

9. Outil de coupe selon la Revendication 6 ou 7, caractérisé en ce que la deuxième surface de raccordement (231, 233) présente au moins une surface conique, et en particulier plusieurs surfaces coniques concentriques.

10. Outil de coupe selon l'une quelconque des Revendications 6 à 9, caractérisé en ce que le support (22) du corps de coupe et le corps (1) de l'outil sont collés l'un à l'autre.

11. Outil de coupe selon l'une quelconque des Revendications 5 à 10, caractérisé en ce que le support (226) du corps de coupe et le corps (1) de l'outil sont emmanchés à retrait l'un dans l'autre.

12. Outil de coupe selon l'une quelconque des Revendications 5 à 9, caractérisé en ce que le support (22) du corps de coupe est appliqué de manière amovible par serrage sur le corps (1) de l'outil.

13. Procédé pour la fabrication d'un outil de coupe rotatif selon l'une quelconque des Revendications précédentes, caractérisé en ce qu' on assemble un corps de coupe à tête pleine (18), formé en un matériau de coupe polycristallin et ultra-dur, tel que le diamant cubique ou le nitrure de bore, et un corps (1) d'outil ou un support de corps de coupe en un matériau de dureté moindre, ayant des sections droites radiales qui sont de tous côtés excessivement plus grandes que la section droite active de l'outil de coupe à fabriquer, l'assemblage étant effectué entre les faces respectives desdits corps en regard l'une de l'autre au niveau d'une surface de raccordement identique, s'étendant transversalement à l'axe de l'outil et on rectifie la surface latérale commune desdits corps jusqu'à obtenir une section droite unitaire, après quoi on procède éventuellement à l'aménagement par meulage dans le profil en section droite de l'outil, d'au moins une rainure à copeaux (4) pénétrant dans le corps de coupe à tête pleine et dans le support du corps de coupe en traversant la surface de raccordement commune et on meule ensuite la surface d'extrémité pour la doter de son tranchant.

14. Procédé selon la Revendication 13, caractérisé en qu'on assemble tout d'abord mutuellement, au niveau d'une première surface de raccordement, le corps de coupe et le support du corps de coupe constitué en un matériau résistant à la déformation et bon conducteur, et en ce qu'ensuite on fixe le support du corps de coupe sur le corps de l'outil.

15. Procédé selon la Revendication 13 ou 14, caractérisé en ce qu'on fait cristalliser au moins partiellement le corps de coupe sur le support du corps de coupe ou le corps de l'outil.

16. Procédé selon l'une quelconque des Revendications 13 à 15, caractérisé en ce que l'on assemble le support du corps de coupe et le corps de l'outil au niveau de la deuxième surface de raccordement par un procédé de fusion avec formation d'une couche intermédiaire en un matériau à conductibilité thermique élevée de telle façon que la température s'abaisse jusqu'au corps de coupe au-dessous de la température de transformation de celui-ci.

17. Procédé selon la Revendication 16, caractérisé en ce que l'on soumet le support du corps de coupe, centré par rapport au corps de l'outil, à une compression contre le support d'outil par l'intermédiaire d'une soudure, en particulier d'une feuille de soudure interposée et en ce que, à cet effet, on chauffe la soudure à la température de fusion, à partir du corps de l'outil, et on la fait ensuite durcir.

18. Procédé selon la Revendication 16 ou 17, caractérisé en ce qu' on dissipe vers l'extérieur par contact massique la chaleur apportée au corps de l'outil au cours du processus de soudage.

19. Procédé selon l'une quelconque des Revendication 16 à 18, caractérisé en ce que l'on refroidit indirectement ou directement le corps de coupe au moins du côté frontal.

Fig 1

Fig 2

Fig 3

Fig 5

Fig 4

Fig 7

Fig. 6

Fig 8

Fig 9

Fig 10

Fig 11

0 104 430

Fig 12

Fig 13

Fig 14

Fig 15

a)    b)    c)    d)    e)    f)